# EUROPÄISCHE PATENTANMELDUNG

(11) **EP 4 545 848 A1**
(43) Veröffentlichungstag der Anmeldung: **30.04.2025**
(21) Anmeldenummer: 24207711.3
(22) Anmeldetag: 21.10.2024
(51) Int. Cl.: F21S 43/237, B62J 6/022, F21S 43/245, F21S 43/242

(54) **LICHTLEITER FÜR EIN LEUCHTELEMENT**

(30) Priorität: 24.10.2023 DE 102023129236
(71) Anmelder: HELLA GmbH & Co. KGaA, 59552 Lippstadt (DE)
(72) Erfinder: Thomanek, Niko, 59494 Soest (DE)

(57) **Zusammenfassung**

Die vorgestellte Erfindung betrifft einen Lichtleiter (100) für ein Leuchtelement (200), wobei der Lichtleiter (100) einen Leuchtkörper (101) umfasst,
wobei der Leuchtkörper (101) eine Schnittstelle (103) zum Einkoppeln von Lichtstrahlen umfasst.

## Beschreibung

Die vorgestellte Erfindung betrifft einen Lichtleiter für ein Leuchtelement, insbesondere ein Positionslicht, einen Scheinwerfer, ein Fahrzeug und ein Herstellungsverfahren gemäß den beigefügten Ansprüchen.

Leuchtelemente, wie Positionslichter, für Fahrzeuge müssen aufgrund verkehrsrechtlicher Vorgaben sowohl in eine Hauptstrahlrichtung, bspw. entlang einer Fahrbahn, als auch seitlich, bspw. nach links und rechts der Fahrbahn bzw. in eine Peripherie der Fahrbahn leuchten.

Dabei sollte ein Abstrahlwinkel eines Positionslichts bzw. einer Positionsleuchte einen seitlichen Abstrahlwinkel von 80° zu der Hauptstrahlrichtung erfüllen, sodass das Positionslicht auch von einer Position seitlich zu einem jeweiligen Fahrzeug gut erkennbar ist.

Bekannte Positionslichter bzw. Begrenzungsleuchten sind für eine einzelne Seite eines Fahrzeugs optimiert und strahlen Licht in einer Hauptstrahlrichtung und einer einzelnen Seite ab. Entsprechend wirken in der Regel zwei Positionslichter zusammen, um in zwei Seiten Licht abzustrahlen.

Ferner ist Bauraum insbesondere bei Krafträdern, wie bspw. Motorrädern, sehr begrenzt verfügbar.

Der vorliegenden Erfindung liegt die Aufgabe zugrunde, ein kompaktes und sicheres Leuchtelement, insbesondere ein kompaktes und sicheres Positionslicht, für ein Fahrzeug bereitzustellen.

Es wird somit gemäß einem ersten Aspekt der vorgestellten Erfindung ein Lichtleiter für ein Leuchtelement, insbesondere ein Positionslicht, vorgestellt.

Der vorgestellte Lichtleiter umfasst einen Leuchtkörper, wobei der Leuchtkörper eine Schnittstelle zum Einkoppeln von Lichtstrahlen umfasst, wobei der Leuchtkörper eine Vielzahl Ausrichtungselemente umfasst, die jeweils dazu konfiguriert sind, in den Leuchtkörper eingekoppelte Lichtstrahlen durch eine der Vielzahl Ausrichtungselemente gegenüberliegende Hauptabstrahlfläche gerichtet in eine Hauptabstrahlrichtung abzustrahlen, wobei der Leuchtkörper zumindest eine Nebenseitenfläche umfasst, die seitlich zwischen der Hauptabstrahlfläche und der Anzahl Ausrichtungselemente verläuft, wobei der Leuchtkörper zumindest eine Seitenabstrahlfläche umfasst, die gegenüber der zumindest einen Nebenseitenfläche verläuft, wobei die zumindest eine Nebenseitenfläche eine Vielzahl glatte Weiterleitungsflächen und eine Vielzahl Rauflächen umfasst, wobei jeweilige Weiterleitungsflächen dazu konfiguriert sein, Lichtstrahlen innerhalb des Leuchtkörpers weiterzuleiten, wobei jeweilige Rauflächen dazu konfiguriert sind, Lichtstrahlen diffus zu reflektieren, sodass zumindest ein Teil von durch jeweilige Rauflächen reflektierten Lichtstrahlen durch die Seitenabstrahlfläche aus dem Leuchtkörper austritt.

Unter einem Ausrichtungselement ist im Kontext der vorgestellten Erfindung ein optisches Element zu verstehen, das dazu konfiguriert ist, in das Ausrichtungselement einfallende Lichtstrahlen auszurichten bzw. zu brechen, sodass diese in eine vorgegebene Richtung gerichtet abgestrahlt werden.

Unter einer Raufläche ist im Kontext der vorgestellten Erfindung eine Fläche auf dem Leuchtkörper des vorgestellten Lichtleiters zu verstehen, die eine gegenüber einer Klarfläche, wie bspw. der Hauptabstrahlfläche, erhöhte Rauheit zeigt. Dabei kann die Rauheit bspw. der durch die VDI 3400-33 vorgegebenen Rauheit entsprechen.

Eine Raufläche kann bspw. eine Struktur, insbesondere eine Vielzahl von Erhebungen und Tälern aufweisen. Bspw. kann eine Raufläche schleifpapierartig sein, wohingegen eine Klarfläche bzw. Abstrahlfläche flach bzw. glatt, bspw. schreibpapierartig sein kann.

Der vorgestellte Lichtleiter basiert auf dem Prinzip, dass dieser mehrere Abstrahlflächen zur Auskopplung bzw. zum Abstrahlen von Licht umfasst, nämlich zum einen eine Hauptabstrahlfläche, durch die gerichtete Lichtstrahlen in einer Hauptabstrahlrichtung abgestrahlt werden, und zum anderen eine Seitenabstrahlfläche, durch die von jeweiligen Rauflächen reflektierte Lichtstrahlen und zufällig durch den Leuchtkörper wandernde Lichtstrahlen ausgekoppelt bzw. abgestrahlt werden.

Durch die Hauptabstrahlfläche ist der vorgestellte Lichtleiter aus einer Hauptrichtung, insbesondere von vorne als leuchtend erkennbar.

Durch die Seitenabstrahlfläche ist der Lichtleiter aus einer Seitenrichtung, d. h., relativ zur Hauptrichtung seitlich versetzt, insbesondere in einem Bereich zwischen insbesondere 45° und mindestens 80° eines Kreisbogens seitlich versetzt zu der Hauptrichtung als leuchtend erkennbar.

Aufgrund der erfindungsgemäß vorgesehenen Rauflächen werden in dem Leuchtkörper wandernde Lichtstrahlen diffus reflektiert, sodass diese zumindest teilweise auf eine Seitenabstrahlfläche treffen und dort aus dem Leuchtkörper austreten.

Der erfindungsgemäß vorgesehene Leuchtkörper kann insbesondere aus transparentem Kunststoff bestehen. Bspw. kann der Leuchtkörper in einem Spritzgussprozess oder einem generativen Herstellungsverfahren bereitgestellt werden.

Es kann vorgesehen sein, dass die Hauptabstrahlfläche eine Halbröhre bildet.

Eine Halbröhre bewirkt ein Weiterleiten bzw. ein Wandern von Lichtstrahlen innerhalb des Leuchtkörpers durch Totalreflektion, sodass der gesamte Leuchtkörper mit

Lichtstrahlen durchstrahlt wird und die gesamte Hauptabstrahlfläche sowie die gesamte Seitenabstrahlfläche leuchten.

Ferner ermöglicht eine Hauptabstrahlfläche in Form einer Halbröhre eine Sichtbarkeit der Halbröhre aus einer Position seitlich zu einer Hauptabstrahlrichtung, insbesondere aus einer Position kleiner 80° zu einer Hauptabstrahlrichtung.

Es kann weiterhin vorgesehen sein, dass der Leuchtkörper einen im Wesentlichen horizontal verlaufenden ersten Teil und einen im Wesentlichen vertikal verlaufenden zweiten Teil umfasst, wobei der erste Teil kürzer ist als der zweite Teil.

Bspw. kann der Leuchtkörper L-förmig bzw. im Wesentlichen L-förmig ausgestaltet sein, sodass insbesondere an dem langen vertikalen Teil sich eine große Seitenabstrahlfläche ausbildet, die besonders gut aus einer Position seitlich zu dem Lichtleiter als leuchtend wahrgenommen werden kann.

Es kann weiterhin vorgesehen sein, dass jeweilige Rauflächen rund, zumindest teilweise abgerundet, vieleckig, viereckig oder rechteckig, insbesondere streifenförmig ausgestaltet sind.

Generell können die Rauflächen jede technisch geeignete Form aufweisen, solange sie Lichtstrahlen diffus reflektieren.

Es kann weiterhin vorgesehen sein, dass die Vielzahl Rauflächen eine Anzahl streifenförmiger Rauflächen umfasst, die sich über eine gesamte Höhe einer Nebenseitenfläche zwischen der Hauptabstrahlfläche und einer die Vielzahl Ausrichtungselemente aufweisenden Rückseite erstrecken.

Durch Rauflächen, die sich über eine gesamte Höhe einer Nebenseitenfläche erstrecken, wird ein großer Teil von durch den Leuchtkörper wandernden Lichtstrahlen eingefangen und diffus abgestrahlt.

Es kann weiterhin vorgesehen sein, dass jeweilige Rauflächen durch jeweilige Weiterleitungsflächen voneinander beabstandet sind.

Durch Weiterleitungsflächen wird sichergestellt, dass durch eine Lichtquelle an einer ersten Seite in den Lichtleiter eingekoppelte Lichtstrahlen auch in von der ersten Seite entfernte Stellen des Lichtleiters wandern. Dazu werden die Lichtstrahlen durch die Weiterleitungsflächen totalreflektiert. Entsprechend kann durch Rauflächen, die durch jeweilige Weiterleitungsflächen voneinander beabstandet sind, ein Kompromiss aus Leuchtkraft der Seitenabstrahlfläche und Leuchtkraft über den gesamten Lichtleiter hinweg erreicht werden. Dazu kann insbesondere eine Fläche jeweiliger Weiterleitungsflächen über die Länge des Leuchtkörpers hinweg variieren, sodass bspw. an einem dem ersten Ende gegenüberliegenden Ende keine bzw. nur minimale Weiterleitungsflächen ausgebildet sind und an dem ersten Ende maximale Weiterleitungsflächen ausgebildet sind.

Gemäß einem zweiten Aspekt betrifft die vorgestellte Erfindung ein Leuchtelement, insbesondere ein Positionslicht, für ein Fahrzeug, wobei das Leuchtelement bzw. das Positionslicht eine Vielzahl möglicher Ausgestaltungen des vorgestellten Lichtleiters umfasst, wobei zumindest ein Lichtleiter mit seiner Abstrahlfläche zu einer ersten Seite des Positionslichts und zumindest ein weiterer Lichtleiter mit seiner Abstrahlfläche zu einer der ersten Seite gegenüberliegenden zweiten Seite ausgerichtet ist.

Das vorgestellte Positionslicht ist aufgrund der erfindungsgemäßen Lichtleiter besonders gut aus einer Position seitlich zu einer Hauptabstrahlrichtung des Positionslichts als leuchtend zu erkennen.

Insbesondere können die Lichtleiter des Positionslichts dazu konfiguriert sein, einen Bereich zwischen insbesondere 45° und mindestens 80° seitlich zu der Hauptabstrahlrichtung auszuleuchten.

Gemäß einem dritten Aspekt betrifft die vorgestellte Erfindung einen Scheinwerfer für ein Fahrzeug, wobei der Scheinwerfer eine mögliche Ausgestaltung des vorgestellten Leuchtelements, insbesondere Positionslichts, umfasst.

Der vorgestellte Scheinwerfer kann aufgrund des Positionslichts besonders kompakt ausgestaltet werden, sodass sich der vorgestellte Scheinwerfer besonders vorteilhaft zum Einsatz an Krafträdern, wie bspw. Motorrädern eignet.

Gemäß einem vierten Aspekt betrifft die vorgestellte Erfindung ein Fahrzeug, wobei das Fahrzeug eine mögliche Ausgestaltung des vorgestellten Leuchtelements, in Form eines Positionslichts, oder eine mögliche Ausgestaltung des vorgestellten Scheinwerfers umfasst.

Das vorgestellte Fahrzeug kann insbesondere ein Kraftrad sein.

Gemäß einem fünften Aspekt betrifft die vorgestellte Erfindung ein Herstellungsverfahren für eine mögliche Ausgestaltung des vorgestellten Lichtleiters.

Das vorgestellte Herstellungsverfahren umfasst das Bereitstellen eines Grundkörpers und das Einbringen von Rauflächen in den Grundkörper mittels eines Lasers.

Durch einen Laser kann ein Leuchtkörper aus bspw. transparentem Kunststoff besonders effizient und exakt bearbeitet werden, sodass sich auf dem Leuchtkörper eine Vielzahl Rauflächen ausbildet.

Anhand der beigefügten Zeichnungen wird die Erfindung nachfolgend näher erläutert. Dabei zeigen:
- Fig. 1: eine mögliche Ausgestaltung des vorgestellten Lichtleiters,
- Fig. 2: eine Detailansicht des Lichtleiters gemäß Fig. 1,
- Fig. 3: eine mögliche Ausgestaltung des vorgestellten Scheinwerfers, der eine mögliche Ausgestaltung des vorgestellten Leuchtelementes/Positionslichts mit dem Lichtleiter gemäß Fig. 1 umfasst,
- Fig. 4: eine mögliche Ausgestaltung des vorgestellten Herstellungsverfahrens,
- Fig. 5: eine mögliche Ausgestaltung des vorgestellten Fahrzeugs, und.
- Fig. 6: eine Schnittdarstellung des Lichtleiters gemäß Fig. 2.

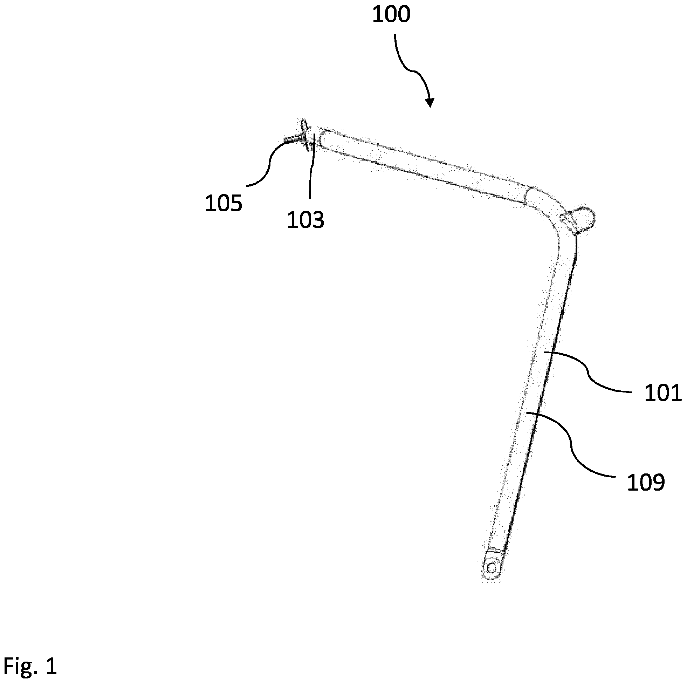

In Fig. 1 ist ein Lichtleiter 100 für ein Leuchtelement 200, wie bspw. einen Scheinwerfer, dargestellt.

Der Lichtleiter 100 umfasst einen Leuchtkörper 101, der eine Schnittstelle 103 zum Einkoppeln von Lichtstrahlen durch eine Lichtquelle 105 umfasst.

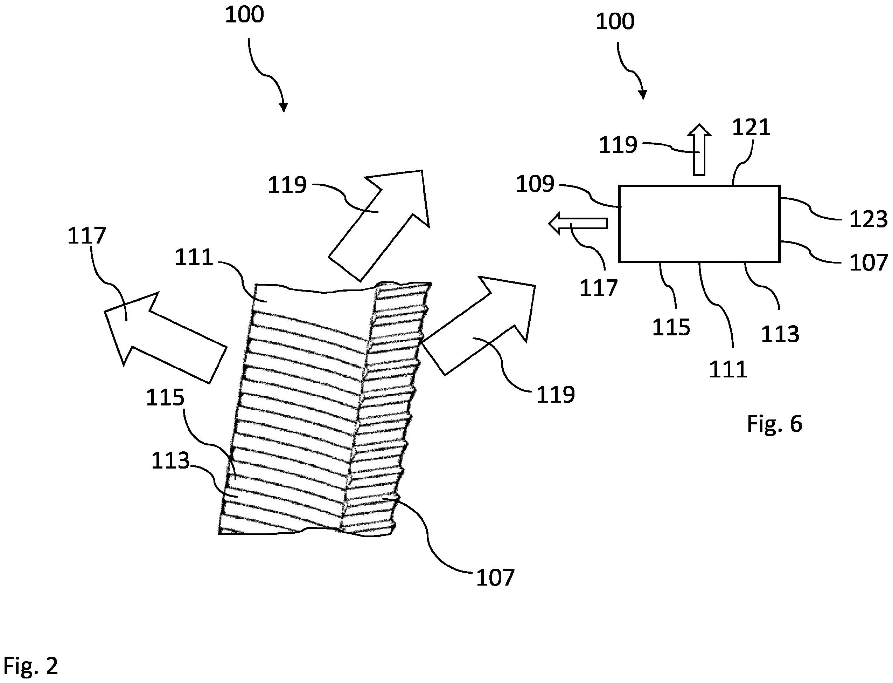

Ferner umfasst der Leuchtkörper 101 eine Vielzahl Ausrichtungselemente 107, wie in Fig. 2 ersichtlich, die jeweils dazu konfiguriert sind, in den Leuchtkörper 101 eingekoppelte Lichtstrahlen durch eine der Vielzahl Ausrichtungselemente 107 gegenüberliegende Hauptabstrahlfläche 109 gerichtet in eine Hauptabstrahlrichtung, wie durch Pfeil 109 angedeutet, abzustrahlen.

Wie ebenfalls in Fig. 2 ersichtlich, umfasst der Leuchtkörper 101 zumindest eine Nebenseitenfläche 111, die seitlich zwischen der Hauptabstrahlfläche 109 und der Anzahl Ausrichtungselemente 107 verläuft.

Ferner umfasst der Leuchtkörper 101 zumindest eine Seitenabstrahlfläche (nicht dargestellt), die gegenüber der zumindest einen Nebenseitenfläche 111 verläuft, wobei die zumindest eine Nebenseitenfläche 111 eine Vielzahl glatter Weiterleitungsflächen 113 und eine Vielzahl Rauflächen 115 umfasst.

Die Seitenabstrahlfläche überstrahlt einen Seitenbereich, wie durch Pfeile 119 angedeutet. Dieser überstrahlte Seitenbereich kann bspw. mindestens 80° eines Kreisbogens umspannen, sodass der Lichtleiter 100 aus dem gesamten Seitenbereich, insbesondere zwischen 1° und 90° seitlich zur Hauptabstrahlrichtung, gut als gleichmäßig leuchtend erkennbar ist.

Die Weiterleitungsflächen 113 sind dazu konfiguriert, Lichtstrahlen innerhalb des Leuchtkörpers 101 weiterzuleiten.

Die Rauflächen 115 sind dazu konfiguriert, Lichtstrahlen diffus zu reflektieren, sodass zumindest ein Teil von durch jeweilige Rauflächen 115 reflektierten Lichtstrahlen durch die Seitenabstrahlfläche aus dem Leuchtkörper 101 austritt.

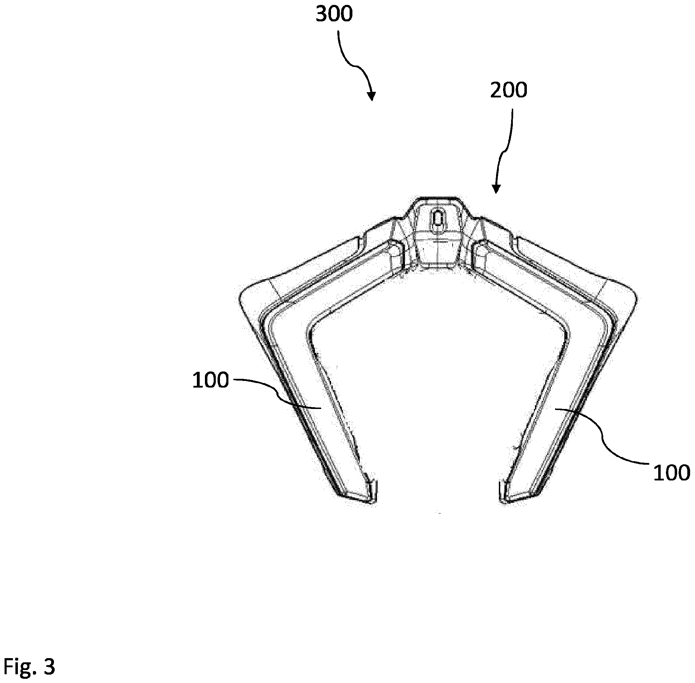

In Fig. 3 ist ein Scheinwerfer 300 dargestellt, der ein als Positionslicht ausgebildetes Leuchtelement 200 umfasst. Das Positionslicht 200 umfasst mehrere Lichtleiter 100 gemäß Fig. 1.

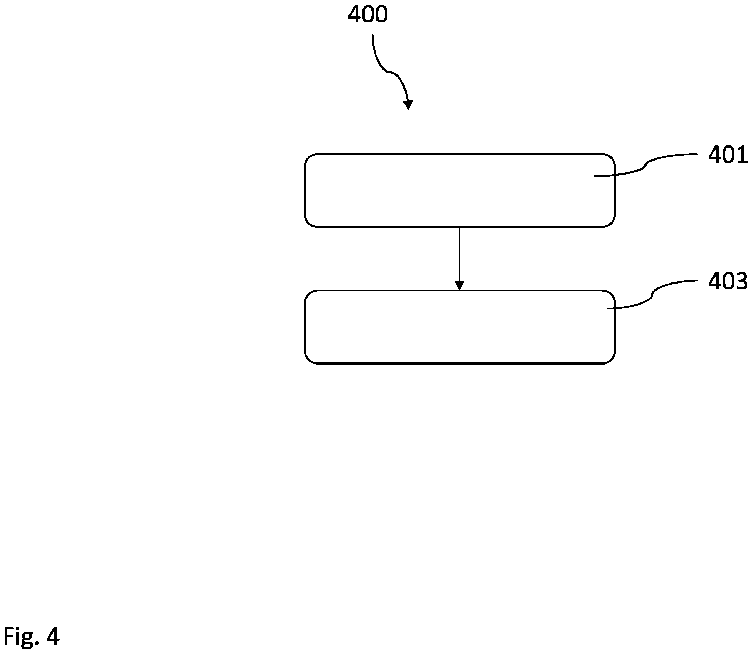

In Fig. 4 ist ein Herstellungsverfahren 400 dargestellt. Das Herstellungsverfahren 400 umfasst einen Bereitstellungsschritt 401, bei dem ein Grundkörper eines Leuchtkörpers bereitgestellt wird und einen Einbringungsschritt 403, bei dem Rauflächen in den Grundkörper mittels eines Lasers eingebracht werden.

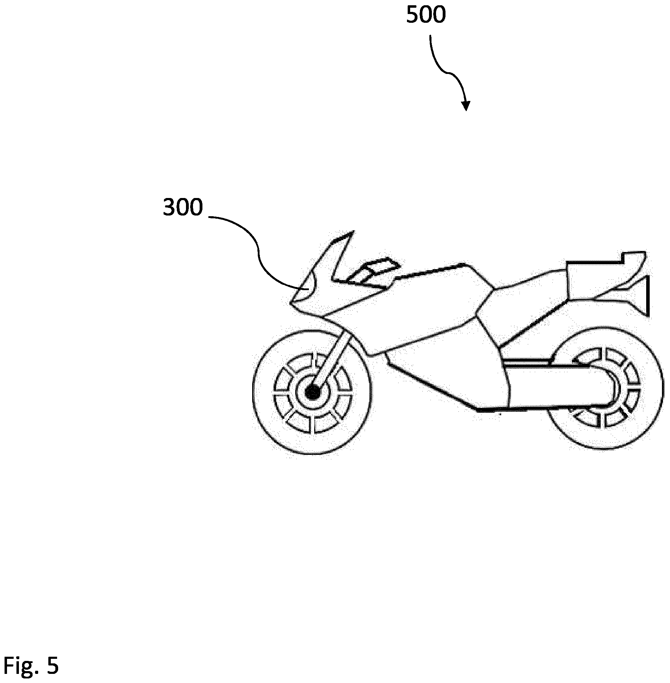

In Fig. 5 ist ein Fahrzeug 500 in Form eines Kraftrads dargestellt. Das Fahrzeug 500 umfasst den Scheinwerfer 300 gemäß Fig. 3.

In Fig. 6 ist eine Schnittdarstellung des Lichtleiters 100 gemäß Fig. 2 gezeigt. In Fig. 6 sind zusätzlich zur Fig. 2 die Seitenabstrahlfläche 121 und die Rückseite 123 des Lichtleiters 100 dargestellt.

### Bezugszeichenliste

- 100: Lichtleiter
- 101: Leuchtkörper
- 103: Schnittstelle
- 105: Lichtquelle
- 107: Ausrichtungselement
- 109: Hauptabstrahlfläche
- 111: Nebenseitenfläche
- 113: Weiterleitungsfläche
- 115: Raufläche
- 117: Pfeil
- 119: Pfeil
- 200: Leuchtelement/Positionslicht
- 300: Scheinwerfer
- 400: Herstellungsverfahren
- 401: Bereitstellungsschritt
- 403: Einbringungsschritt

## Patentansprüche

1. Lichtleiter (100) für ein Leuchtelement (200),
wobei der Lichtleiter (100) einen Leuchtkörper (101) umfasst,
wobei der Leuchtkörper (101) eine Schnittstelle (103) zum Einkoppeln von Lichtstrahlen umfasst,
wobei der Leuchtkörper (101) an einer Rückseite (123) eine Vielzahl Ausrichtungselemente (107) umfasst, die jeweils dazu konfiguriert sind, in den Leuchtkörper (101) eingekoppelte Lichtstrahlen durch eine der Vielzahl Ausrichtungselemente (107) gegenüberliegende Hauptabstrahlfläche (109) gerichtet in eine Hauptabstrahlrichtung (117) abzustrahlen,
wobei der Leuchtkörper (101) zumindest eine Nebenseitenfläche (111) umfasst, die seitlich zwischen der Hauptabstrahlfläche (109) und der Anzahl Ausrichtungselemente (107) verläuft,
wobei der Leuchtkörper (101) zumindest eine Seitenabstrahlfläche (121) umfasst, die gegenüber von der zumindest einen Nebenseitenfläche (111) verläuft,
wobei zumindest eine Nebenseitenfläche (111) eine Vielzahl glatte Weiterleitungsflächen (113) und eine Vielzahl Rauflächen (115) umfasst,
wobei jeweilige Weiterleitungsflächen (113) dazu konfiguriert sein, Lichtstrahlen innerhalb des Leuchtkörpers (101) weiterzuleiten,
wobei jeweilige Rauflächen (115) dazu konfiguriert sind, Lichtstrahlen diffus zu reflektieren, sodass zumindest ein Teil von durch jeweilige Rauflächen (115) reflektierten Lichtstrahlen durch die Seitenabstrahlfläche (121) aus dem Leuchtkörper (101) austritt.

2. Lichtleiter (100) nach Anspruch 1,
**dadurch gekennzeichnet,**
**dass** jeweilige Rauflächen (115) eine Rauheit gemäß VDI 3400-33 aufweisen.

3. Lichtleiter (100) nach Anspruch 1 oder 2,
**dadurch gekennzeichnet,**
**dass** die Hauptabstrahlfläche (109) eine Halbröhre bildet.

4. Lichtleiter (100) nach einem der voranstehenden Ansprüche,
**dadurch gekennzeichnet,**
**dass** der Leuchtkörper (101) einen im Wesentlichen horizontal verlaufenden ersten Teil und einen im Wesentlichen vertikal verlaufenden zweiten Teil umfasst, wobei der erste Teil kürzer ist als der zweite Teil.

5. Lichtleiter (100) nach einem der voranstehenden Ansprüche,
**dadurch gekennzeichnet,**
**dass** jeweilige Rauflächen (115) rund, zumindest teilweise abgerundet, vieleckig, viereckig oder rechteckig, insbesondere streifenförmig ausgestaltet sind.

6. Lichtleiter (100) nach einem der voranstehenden Ansprüche,
**dadurch gekennzeichnet,**
**dass** die Vielzahl Rauflächen (115) eine Anzahl streifenförmiger Rauflächen umfasst, die sich über eine gesamte Höhe einer Nebenseitenfläche (111) zwischen der Hauptabstrahlfläche (109) und einer die Vielzahl Ausrichtungselemente (107) aufweisenden Rückseite (123) erstrecken.

7. Lichtleiter (100) nach einem der voranstehenden Ansprüche,
**dadurch gekennzeichnet,**
**dass** jeweilige Rauflächen (115) durch jeweilige Weiterleitungsflächen (113) voneinander beabstandet sind.

8. Leuchtelement (200) für ein Fahrzeug,
wobei das Leuchtelement (200) eine Vielzahl Lichtleiter (100) nach einem der Ansprüche 1 bis 7 umfasst.

9. Scheinwerfer (300) für ein Fahrzeug,
wobei der Scheinwerfer (300) ein Leuchtelement (200) nach Anspruch 8 umfasst.

10. Fahrzeug (500),
wobei das Fahrzeug (500) ein Leuchtelement (200) nach Anspruch 8 oder einen Scheinwerfer (300) nach Anspruch 9 umfasst.

11. Herstellungsverfahren (400) für einen Lichtleiter (100) nach einem der Ansprüche 1 bis 7,
wobei das Herstellungsverfahren (400) umfasst:
- Bereitstellen (401) eines Grundkörpers,
- Einbringen (403) von Rauflächen in den Grundkörper mittels eines Lasers.
